# EUROPÄISCHE PATENTSCHRIFT

(11) **EP 0 424 739 B1**
(45) Veröffentlichungstag und Bekanntmachung des Hinweises auf die Patenterteilung: **26.01.1994**
(21) Anmeldenummer: 90119477.9
(22) Anmeldetag: 11.10.1990
(51) Int. Cl.: B22F 1/00, B22F 3/22, C04B 35/00, C22C 1/09

(54) **Verfahren zur Herstellung von Formlingen aus keramischen oder metallischen Fasern**
Process for producing preforms from ceramic or metallic fibers
Procédé de fabrication de préformes à partir de fibres métalliques ou céramiques

(30) Priorität: 24.10.1989 DE 3935276
(43) Veröffentlichungstag der Anmeldung: 02.05.1991
(73) Patentinhaber: BASF Aktiengesellschaft, 67063 Ludwigshafen (DE)
(72) Erfinder: Bittler, Knut, Dr., W-6720 Speyer (DE); Ter Maat, Johan Herman Hendrik, W-6800 Mannheim 1 (DE); Sterzel, Hans-Josef, Dr., W-6701 Dannstadt-Schauernheim (DE)

(56) Entgegenhaltungen:
- EP-A- 0 210 502
- DE-A- 2 305 341
- ADVANCED CERAMICS REPORT, Band 4, August 1989, Seiten 6-7; "Fibre preforms formetal matrix composites"

## Beschreibung

Keramische Fasern oder metallische Fasern auf der Basis von Aluminiumoxid, Siliziumcarbid oder Titan finden zunehmend Verwendung zur mechanischen Verstärkung von Metallen. Vor allem Aluminiumlegierungen lassen sich durch Einbringen von bis zu 30 Vol.-% keramischer Fasern wesentlich hochtemperaturfester ausrüsten.

Zur Herstellung solcher faserverstärkten Metalle werden die keramischen oder metallischen Fasern zu einem schmelzedurchlässigen Formling, auch als Preform bezeichnet, verarbeitet. Diese Preform wird in die Form eingelegt, mit der das Metallteil gegossen wird. Das flüssige Metall wird in die Form gegossen und umfließt die eingelegte Preform und wird dann durch Abkühlen verfestigt. Hierdurch wird erreicht, daß sich die Verstärkungsfasern an den Stellen befinden, wo sie auch benötigt werden.

Die Herstellung der Preforms ist jedoch sehr aufwendig. Üblicherweise stellt man die Preforms durch Wirken endlos langer Fasern her. Da jedoch keramische Fasern bei Biegung leicht brechen, hat es sich eingeführt, daß die Fasern zunächst mit einem organischen Bindemittel beschichtet werden. Danach werden die Fasern zu kurzen Stücken geschnitten und mit Wasser oder einem Lösungsmittel zu einem Faserbrei suspendiert. Dieser Brei wird in poröse Formen gebracht und dort das Wasser oder Lösungsmittel durch Filtration oder Verdampfen entfernt. Die zurückbleibende lockere Fasermasse wird nach Erhitzen über die Fließtemperatur des Bindemittels gebunden und gegebenenfalls unter Druck kompaktiert. Nach dem Abkühlen wird das Bindemittel durch Auslösen oder Ausbrennen entfernt, bevor die Preform mit dem geschmolzenen Metall übergossen wird.

Dieses Herstellverfahren für die faserhaltigen Preforms weist einige Nachteile auf: Zum einen ist die Produktion zeitaufwendig und die Preforms sind entsprechend teuer. Zum anderen ist es kaum möglich, Preforms mit komplexer Geometrie herzustellen. Nach einem neueren Verfahren (Advanced Ceramics Report, Vol. 4, Nr. 8, August 1989, Seite 6) werden kurze keramische oder metallische Fasern mit einem organischen thermoplastischen Bindemittel unter Einsatz von Dispergiermitteln gemischt und das so erhaltene 10 bis 40 Vol.-% Fasern enthaltende Verbundmaterial (Grünkörper) im Spritzgußverfahren zu Formkörpern verarbeitet. Das Spritzgußverfahren ermöglicht hohe Stückzahlen bei komplexer Geometrie der Formteile. Nach der Formgebung muß das thermoplastische Bindemittel umständlich entfernt werden. Die Entfernung des Binders geschieht meistens durch Pyrolyse über Zeiten von Stunden bis Tagen, je nach Wandstärke.

Der vorliegenden Erfindung lag die Aufgabe zugrunde, ein Verfahren zur Herstellung von Formlingen aus keramischen und/oder metallischen Fasern durch Verformen eines die Fasern und ein thermoplastisches Bindemittel enthaltenden Gemisches durch Spritzgießen oder Strangpressen und Entfernen des Bindemittels, bereitzustellen, welches frei von den geschilderten Mängeln ist und insbesondere die Produktion geometrisch komplexer Preforms mit hoher Produktivität gewährleistet.

Diese Aufgabe wird dadurch gelöst, daß man als Bindemittel Polyoxymethylen verwendet und dieses nach der Verformung durch Behandeln in einer gasförmigen, säurehaltigen oder in einer gasförmigen Bortrifluorid enthaltenden Atmosphäre entfernt.

Im einzelnen wird bei dem erfindungsgemäßen Verfahren so vorgegangen, daß man die keramischen oder metallischen Fasern mit dem Polyoxymethylen vermischt und bei Temperaturen oberhalb des Schmelzpunktes des Polyoxymethylens zu Granulaten verarbeitet. Als Fasern kann man keramische oder metallische Fasern aus z.B. Al₂O₃, ZrO₂, SiO₂, Y₂O₃, Si₃N₄, SiC, Si, Fe, B oder Ti einsetzen. Unter Fasern werden auch Whiskers z.B. Eisenwhiskers verstanden. Die Fasern haben einen Durchmesser im Bereich von 0,1 bis 50 µm. Selbstverständlich können anstelle von Fasern aus einem Material auch Fasern verschiedener Materialien eingesetzt werden. Als Polyoxymethylen setzt man sowohl Homopolymerisate als auch Copolymerisate des Formaldehyds mit Molmassen von 25.000 bis 75.000 ein. Unter Copolymerisaten seien die Polymerisate des Formaldehyds bzw. Trioxans mit z.B. Ethylenoxid, 1,3-Dioxolan oder Butandiolformal verstanden, die in Mengen von z.B. 2 bis 10 Massen% vorliegen können.

Die zu verformenden Mischungen enthalten neben den anorganischen Fasern 30 bis 90 Vol.-%, vorzugsweise 30 bis 60 Vol.-% Polyoxymethylen.

Zusätzlich können die Mischungen auch Netzmittel, Plastifiziermittel oder andere Hilfsmittel, die die rheologischen Eigenschaften der Mischungen bei der Verformung günstig beeinflussen, enthalten.

Die Herstellung der zu verformenden Massen erfolgt auf übliche Weise in einem Kneter oder Extruder bei Temperaturen von 150 bis 200°C. Falls erwünscht, kann die Masse nach dem Abkühlen granuliert werden.

Für die Verformung durch Spritzguß können die üblichen Schnecken- und Kolbenspritzgußmaschinen eingesetzt werden und bei Temperaturen von 175 bis 200°C und Drucken von 3.000 bis 20.000 kPa in eine Form, die auf 20 bis 120°C gehalten wird, verformt werden.

Die entformten faserhaltigen Massen werden dann erfindungsgemäß in einer gasförmigen säurehaltigen Atmosphäre zwecks Entfernung des Bindemittels behandelt. Unter gasförmigen säurehaltigen Atmosphären können sowohl reine Säuren verstanden werden, die bei den Behandlungstemperaturen gas- bzw. dampfförmig vorliegen, es können aber auch darunter Mischungen von Säuren mit einem Trägergas verstanden werden. Als Trägergase kommen beispielsweise Luft oder Stickstoff oder Edelgase in Betracht. Als Säuren kommen die anorganischen Säuren in Betracht, die bei Raumtemperatur gasförmig sind, z.B. die Halogenwasserstoffe, Schwefelwasserstoff oder solche Säuren, die bei den Behandlungstemperaturen in merklichem Umfang verdampfbar sind, z.B. Salpetersäure. Als organische Säuren kommen grundsätzlich solche Säuren in Betracht, die einen Siedepunkt bei Normaldruck von unter 130°C haben, z.B. Ameisensäure, Essigsäure oder Trifluoressigsäure.

Die erhaltenen Formkörper können aber auch in einer gasförmigen Bortrifluorid enthaltenden Atmosphäre zwecks Entfernung des Bindemittels behandelt werden. Unter gasförmigen Bortrifluorid enthaltenden Atmosphären kann sowohl reines Bortrifluorid verstanden werden, es können aber auch darunter Mischungen von Bortrifluorid mit einem Trägergas verstanden werden. Als Trägergase kommen beispielsweise Luft oder Stickstoff oder Edelgase in Betracht.

Anstelle von Bortrifluorid können selbstverständlich auch Addukte von Bortrifluorid verwendet werden, die bei den Behandlungstemperaturen reversibel und ohne Zersetzung der Komponenten wieder in die Ausgangskomponenten gespalten werden können. Insbesondere geeignet sind die Additionsverbindungen des Bortrifluorids mit Ethern, z.B. Dimethylether, Diethylether, Dibutylether und tert.-Dibutylmethylether.

Der Grünkörper wird bei Temperaturen von 20 bis 150°C mit der säurehaltigen bzw. Bortrifluorid enthaltenden Atmosphäre in Berührung gebracht. Vorzugsweise wendet man Temperaturen von 70 bis 130°C an. Von der Konzentration der Säure bzw des Bortrifluorids im Gas und der angewandten Temperatur hängt die Behandlungsdauer ab, wobei steigende Temperatur und steigende Konzentration der Säure bzw. des Bortrifluorids die Behandlungsdauer abkürzen. Bei Verwendung eines Trägergases wird dieses z.B. zunächst durch die Säure bzw. das BF₃ oder das BF₃-Addukt geleitet und so beladen.

Das beladene Trägergas wird dann auf die Behandlungstemperatur gebracht, die zweckmäßig mindestens 10°C über der Beladungstemperatur liegen sollte, um eine Kondensation zu vermeiden. Nach Verlassen des Behandlungsraumes kann die Säure bzw. das BF₃ aus der Gasmischung, die neben Formaldehyd, Trioxan auch weitere Zersetzungsprodukte des Polyoxymethylens enthält, zwecks Wiederverwendung auskondendiert werden.

Mit dem erfindungsgemäßen Verfahren werden einzigartige Vorteile in der Entfernung des Binders errungen. Es hat den Vorteil, daß die Entfernung des Bindemittels bei niedrigen Temperaturen erfolgt und daß keine homogene Zersetzung stattfindet, d.h. daß die Zersetzung ausschließlich von der Grenzfläche Polymer/Gas fortschreitend nach innen verläuft und eine unerwünschte Gasentwicklung im Inneren des Formkörpers nicht stattfindet. Somit ist eine schnelle, unbehinderte Abfuhr der Zersetzungsgase nach außen sichergestellt. Außerdem ist es möglich, die Behandlung weit unterhalb der Erweichungstemperatur (150°C) des Polyoxymethylens durchzuführen. Damit kann eine plastische Verformung des Grünkörpers während der Binderentfernung vermieden werden und so die Maßhaltigkeit gewährleistet werden.

Ein weiterer Vorteil des erfindungsgemäßen Verfahrens ist die extrem niedrige Verfahrenstemperatur (20 - 130°C), bei der die Entfernung gelingt. Bei derart niedrigen Temperaturen wird man im allgemeinen auf die inerte Atmosphäre, die üblicherweise bei nichtoxidischen Fasern und Metallfasern zur Vorbeugung der Oberflächenoxidation eingesetzt wird, verzichten können.

Die nach dem erfindungsgemäßen Verfahren hergestellten Faser-Preforms eignen sich für die Herstellung von faserverstärkten Metallen indem man sie in geschmolzenes Metall einbettet und das geschmolzene Metall anschließend verfestigt.

### Beispiele

### Beispiel 1

Aus 75 g eines handelsüblichen Copolymerisates von Polyoxymethylen und 2 Gew.-% Butandiolformal, 200 g Aluminiumoxidkurzfasern der mittleren Länge 0,5 mm und 12 µm Durchmesser und 5 g Polyethylenglykol als Schmiermittel wurde mit einem beheizbaren Laborkneter ein Granulat gefertigt, das mit einer normalen Spritzgußmaschine zu Stäbchen (6 x 4 x 50 mm) verarbeitet wurde (Gehalt an Polyoxymethylen: 51,4 Vol.-%).

Ein Stäbchen wurde bei einer Behältertemperatur von 110°C 7,5 Stunden lang mit einer Gasmischung, die durch Durchleiten von 20 l/h Stickstoff durch auf 90°C erhitzte Ameisensäure erhalten worden ist, behandelt. Der Gewichtsverlust betrug 26,1 %, im wesentlichen dem Gehalt des Polyoxymethylen entsprechend. Es fand keine Änderung der Dimensionen des eingesetzten Stäbchens statt.

### Beispiel 2

Ein Stäbchen aus Beispiel 1 wurde eine Stunde lang auf 300°C erwärmt. Dies bewirkte einen Gewichtsverlust von 27,0 %.

Die erhaltene Preform hatte sich verzogen, wobei der Verzug, gemessen als nicht isotrope Längenänderung, bis zu 5,6 % betrug.

### Beispiel 3

Aus 200 g eines handelsüblichen Copolymerisats von Polyoxymethylen und 2,5 Gew.-% Butandiolformal, 76 g Aluminiumoxidkurzfasern der mittleren Länge 0,5 mm und 12 µm Durchmesser und 2,0 g Polyethylenglykol der Molmasse 400 g/Mol als Schmiermittel wurde mittels eines beheizten Laborkneters bei 180°C ein Granulat gefertigt, das mit einer Spritzgußmaschine zu Stäbchen von 6 x 4 x 50 mm verarbeitet wurde.

### Der Gehalt an Fasern betrug 12 Vol-%.

Ein Stäbchen wurde bei einer Temperatur von 130°C 1 Stunde lang mit einem Gasgemisch aus 98 Vol-% Stickstoff und 2 Vol-% Bortrifluorid behandelt. Der Gewichtsverlust betrug 72,0 %, im wesentlichen dem Gehalt des Polyoxymethylens entsprechend. Es fand keine Dimensionsänderung statt.

## Patentansprüche

1. Verfahren zur Herstellung von Formlingen aus keramischen und/oder metallischen Fasern durch Verformen eines die Fasern und ein thermoplastisches Bindemittel enthaltenden Gemisches durch Spritzgießen oder Strangpressen und Entfernen des Bindemittels, dadurch gekennzeichnet, daß man als Bindemittel Polyoxymethylen verwendet und dieses nach der Verformung durch Behandeln in einer gasförmigen, säurehaltigen oder in einer gasförmigen, Bortrifluorid enthaltenden Atmosphäre entfernt.

2. Verfahren nach Anspruch 1, dadurch gekennzeichnet, daß das Gemisch 30 bis 60 Vol.-% Polyoxymethylen enthält.

3. Verfahren nach Ansprüchen 1 bis 2, dadurch gekennzeichnet, daß man Fasern aus Al₂O₃, ZrO₂, SiO₂, Y₂O₃, Si₃N₄, SiC, Si, Fe, B, Ti einsetzt.

4. Verfahren nach Ansprüchen 1 bis 3, dadurch gekennzeichnet, daß man die Behandlung bei Temperaturen von 20 bis 150°C, vorzugsweise 70 bis 150°C durchführt.

5. Verfahren nach Ansprüchen 1 bis 4, dadurch gekennzeichnet, daß man als Säuren Salpetersäure, Halogenwasserstoffsäuren und/oder organische Säuren mit einem Siedepunkt unter 130°C einsetzt.

6. Verwendung der Formlinge gemäß Ansprüchen 1 bis 5 zur Herstellung von faserverstärkten Metallen durch Einbetten der Formlinge in geschmolzenes Metall und Verfestigung des Metalles.

## Claims

1. A process for producing a preform from ceramic or metallic fibers by shaping a mixture containing the fibers and a thermoplastic binder by injection molding or extrusion and removing the binder, wherein the binder used is polyoxymethylene and it is removed after the shaping by treatment in a gaseous acid-containing atmosphere or in a gaseous BF₃-containing atmosphere.

2. A process as claimed in claim 1, wherein the mixture contains from 30 to 60 % by volume of polyoxymethylene.

3. A process as claimed in claim 1 or 2, wherein fibers formed from Al₂O₃, ZrO₂, SiO₂, Y₂O₃, Si₃N₄, SiC, Si, Fe, B or Ti are used.

4. A process as claimed in claims 1 to 3, wherein the treatment is carried out at from 20 to 150°C, preferably at from 70 to 130°C.

5. A process as claimed in claims 1 to 4, wherein the acid used is nitric acid, a hydrohalic acid or an organic acid having a boiling point below 130°C.

6. Use of a preform as claimed in claims 1 to 5 for producing a fiber-reinforced metal by embedding the preform in the molten metal and solidifying the metal.

## Revendications

1. Procédé de préparation de préformes à partir de fibres céramiques et/ou métalliques par façonnage d'un mélange contenant les fibres et un liant thermoplastique par injection ou extrusion et élimination du liant, caractérisé en ce qu'on utilise comme liant du polyoxyméthyléne et on élimine celui-ci, après le façonnage, par traitement dans une atmosphère contenant un acide gazeuse ou dans une atmosphère contenant du trifluorure de bore gazeuse.

2. Procédé selon la revendication 1, caractérisé en ce que le mélange contient de 30 à 60% en volume de polyoxyméthylène.

3. Procédé selon la revendication 1 ou 2, caractérisé en ce qu'on utilise des fibres faites de Al₂O₃, ZrO₂, SiO₂, Y₂O₃, Si₃N₄, SiC, Si, Fe, B, Ti.

4. Procédé selon l'une quelconque des revendications 1 à 3, caractérisé en ce qu'on effectue le traitement à des températures de 20 à 150°C, de préférence de 70 à 150°C.

5. Procédé selon l'une quelconque des revendications 1 à 4, caractérisé en ce qu'on utilise comme acides de l'acide nitrique, des hydracides halogénés et/ou des acides organiques avec un point d'ébullition inférieur à 130°C.

6. Utilisation des préformes obtenues selon l'une quelconque des revendications 1 à 5, pour la préparation de métaux renforcés par des fibres par incorporation des préformes dans du métal fondu et solidification du métal.
